# EUROPEAN PATENT APPLICATION

(11) **EP 2 418 807 A1**
(43) Date of publication of application: **15.02.2012**
(21) Application number: 09842998.8
(22) Date of filing: 07.04.2009
(51) Int. Cl.: H04L 12/46

(54) **COMMUNICATION ADAPTER DEVICE**

(71) Applicant: Mitsubishi Electric Corporation, Tokyo 100-8310 (JP)
(72) Inventor: KOMATSU, Masayuki, Tokyo 100-8310 (JP)
(74) Representative: Pfenning, Meinig & Partner GbR
(86) International application number: PCT/JP2009/057097
(87) International publication number: WO 2010/116488

(57) **Abstract**

An object is to provide a communication adapter apparatus that allows main equipment to be easily connected to a plurality of communication networks based on different communication protocols.
The communication adapter apparatus 100 according to the present invention is a communication adapter apparatus connecting main equipment 200 to a communication network, which includes a main equipment interface section 7 connecting to the main equipment 200, a memory 3 that stores a plurality of communication protocol stacks 11 corresponding to various communication networks, a microcomputer 2, an Ethernet (registered trademark) communication connecting connector 6 that is connected to the communication network, and a communication control circuit 5 for controlling transmission and reception of communication data, in which the microcomputer 2 includes a protocol selecting section 10 for selecting any one from among the plurality of communication protocol stacks 11 and a protocol abstraction section 9 for performing data conversion for the data that the main equipment 200 transmits to and receives from a communication network in accordance with a protocol stack selected by the protocol selecting section 10.

## Description

### Technical Field

The present invention relates to a communication adapter apparatus that connects main equipment such as a control apparatus to a communication network.

### Background Art

Conventionally, data transmission and reception have been performed via a communication network between, for example, main equipment such as a control apparatus and each of various types of devices. Such main equipment has to provide communications meeting the communication specifications of the communication network since various communication infrastructures are mixed on the market.

As a technology for connecting to communication networks based on a different protocol, there has been proposed an example in which a plurality of communication units are replaceably configured which can be respectively connected to a plurality of networks based on different protocols, wherein the terminal unit performs communications in a corresponding network via a communication unit connected thereto (for example, see Patent Document 1).

Also, there has been proposed an example in which an interface matching section is provided on the TCP/IP protocol, which causes an upper level interface of the protocol to appear similar to the upper level interface of the OSI transport layer (for example, see Patent Document 2).

Furthermore, there has been proposed an example which includes a network dependent module implemented with a functional circuit for performing a protocol that is dependent on each of the plurality of types of networks and a network independent module implemented with a functional circuit for performing a common protocol that is not dependent on the plurality of types of networks, wherein the network dependent module is equipped with a communication connector for connecting with one of the plurality of types networks, and the network independent module is equipped with a device connector for connecting with a processing unit, and wherein the network dependent module and the network independent module are interconnected via an interconnecting interface circuit and a detachable inter-module connector (see, for example, Patent Document 3).

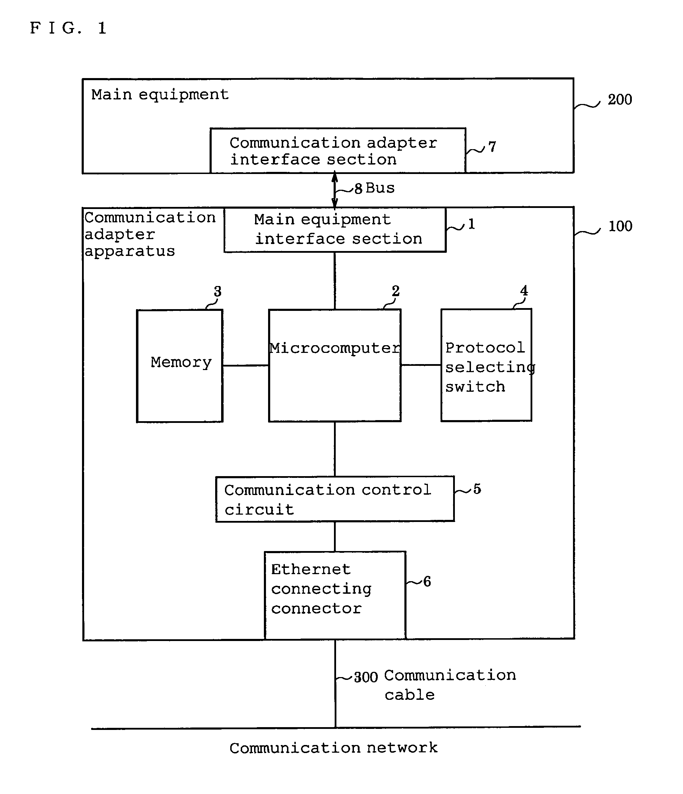

[Patent Document 1] Japanese Unexamined Patent Application Publication No. 11-127213 (page 2, Fig. 2)
[Patent Document 2] Japanese Unexamined Patent Application Publication No. 5-227168 (page 2, Fig. 1)
[Patent Document 3] Japanese Unexamined Utility Model Registration Application Publication No. 5-88050 (page 5, Fig. 1)

### Disclosure of Invention

### Problems to be Solved by the Invention

According to a technology disclosed in Patent Document 1 above, a terminal unit is connected to each communication network by replacing with a communication adapter corresponding to the communication network. However, users must purchase more than one communication adapter due to the necessity of preparing a communication adapter for each communication network, resulting in an increase in cost. In addition, manufacturers must manufacture and control communication adapters for each communication network, which may cause losses resulting from increasing product types in stock and a resultant increase in dead stock (unsold inventory).

Also, the technology disclosed in Patent Document 2 above assumes the TCP/IP meeting the OSI reference model, in which any communication protocol as well as any data format cannot be applied to different communication networks.

Furthermore, according to a technology disclosed in Patent Document 3 above, a network dependent module and a network independent module are separately provided, and the network dependent module is replaced according to a communication network. However, due to the communication processing board, limitations are placed regarding a method of connecting with the main equipment, and it is difficult to obtain a configuration such as external mounting to the main equipment.

The present invention has been achieved to solve the afore-mentioned problems. According to the present invention, there is provided a communication adapter apparatus that allows main equipment to be easily connected to a plurality of communication networks based on different communication protocols.

### Means for Solving the Problems

The communication adapter apparatus according to the present invention is a communication adapter apparatus for connecting main equipment to a communication network, including a main equipment interface section connecting to the main equipment, a communication protocol stack storage section that stores a plurality of communication protocol stacks corresponding to various communication networks, a control section, a communication connecting connector connecting to the communication network, and a communication control section for controlling transmission and reception of communication data, in which the control section includes a protocol selecting means for selecting any one from among the plurality of communication protocol stacks and a protocol abstraction means for performing data conversion for the data that the main equipment transmits to and receives from the communication network in accordance with a communication protocol stack selected by the protocol selecting means.

### Advantages

According to the present invention, main equipment can be easily connected to various communication networks without changing the software of the main equipment by performing conversion of data which the main equipment transmits to and receives from a communication network in accordance with a selected communication protocol. Brief Description of Drawings

[Fig. 1] Fig. 1 is a hardware configuration diagram of a communication adapter apparatus according to Embodiment 1.
[Fig. 2] Fig. 2 is a functional configuration diagram of a communication adapter apparatus according to Embodiment 1.
[Fig. 3] Fig. 3 is a flowchart illustrating the operation of communication protocol selection according to Embodiment 1.
[Fig. 4] Fig. 4 is a diagram describing the operation of a communication protocol abstraction section according to Embodiment 1.
[Fig. 5] Fig. 5 is a diagram describing the operation of a communication protocol abstraction section according to Embodiment 2.
[Fig. 6] Fig. 6 is a hardware configuration diagram of a communication adapter apparatus according to Embodiment 3.
[Fig. 7] Fig. 7 is a diagram describing the operation of a communication adapter apparatus according to Embodiment 3.
[Fig. 8] Fig. 8 is a hardware configuration diagram of a communication adapter apparatus according to Embodiment 4.

### Best Mode for Carrying Out the Invention

### Embodiment 1

Fig. 1 is a diagram showing a hardware configuration of a communication adapter apparatus according to Embodiment 1. A communication adapter apparatus 100 is an apparatus for connecting main equipment 200 such as a control apparatus to a network via a communication cable 300. Embodiment 1 is described using as an example of a communication network that is connected by Ethernet (registered trademark).

The communication adapter apparatus 100 includes a main equipment interface section 1, a microcomputer 2, a memory 3, a protocol selecting switch 4, a communication control circuit 5, and an Ethernet connecting connector 6.

The main equipment interface section 1 is an interface for connecting with the main equipment 200 and constructed of, for example, a dedicated plug. The microcomputer 2 controls operation of each section in the communication adapter apparatus 100, corresponding to a control section of the present invention. The memory 3 is a readable-writable memory device that stores various communication data that the communication adapter apparatus 100 transmits to and receives from the main equipment 200 as well as a conversion table 12 and a conversion rule 13 to be mentioned later.

The protocol selecting switch 4 is a switch for selecting a communication protocol of a communication network to be connected and constructed of a 2-bit DIP switch. Users specify the communication protocol of the communication network by actuating the protocol selecting switch 4. For example, the correspondence between the bit setting of the protocol selecting switch 4 and the communication protocol is set in advance as 00:PROFINET. 01:modbus-TCP, 10:EtherNet/IP, or the like.

The communication control circuit 5 is a circuit for controlling Ethernet communication, performing control of data transmission and reception under the control of the microcomputer 2. The Ethernet connecting connector 6 is a connector for connecting the communication cable 300 of the Ethernet to the communication adapter apparatus 100.

The communication adapter apparatus 100 and the main equipment 200 having the configuration as described above can provide data transmission therebetween via a bus 8 by connecting a communication adapter interface section 7 and the main equipment interface section 1. The main equipment 200 can be connected to a communication network through the communication adapter apparatus 100 and the communication cable 300.

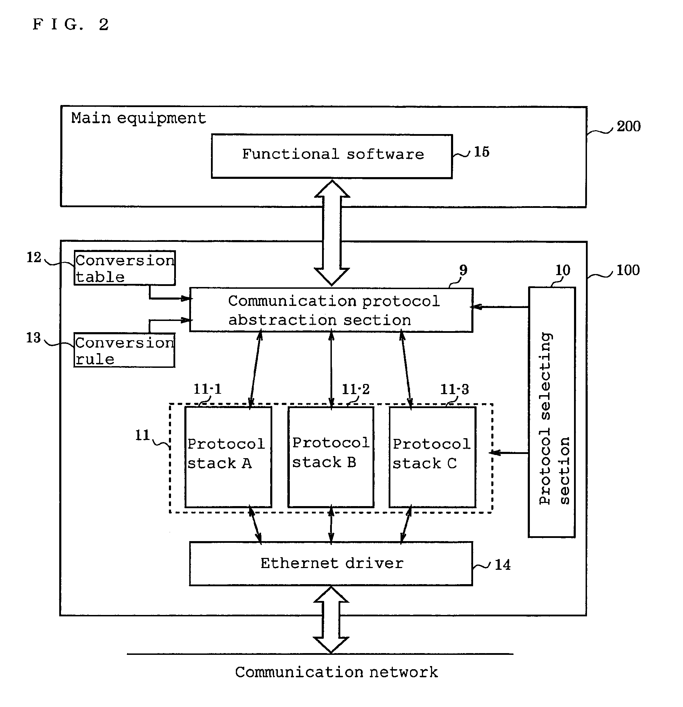

Fig. 2 is a diagram showing the functional configuration of the communication adapter apparatus 100 according to Embodiment 1. The communication adapter apparatus 100 includes a communication protocol abstraction section 9, a protocol selecting section 10, a protocol stack 11, a conversion table 12, a conversion rule 13, and an Ethernet driver 14. Each of the functions realized by the communication adapter apparatus 100 is performed by the microcomputer 2 in accordance with a program stored in advance in a memory (not illustrated) incorporated in the memory 3 or the microcomputer 2.

The protocol selecting section 10 selects a protocol stack to be used from among a protocol stackA11-1, a protocol stack B11-2, and a protocol stack C11-3 on the basis of the setting of the protocol selecting switch 4. Also, the protocol selecting section 10 notifies the communication protocol abstraction section 9 of the selected protocol stack.

The conversion table 12 and the conversion rule 13 are table information or rule information that stores the correspondence between the data that the main equipment 200 transmits and receives and the data that is appropriate for the communication network, being stored in the memory 3. In Embodiment 1, the case where both of the conversion table 12 and the conversion rule 13 are provided is described as an example. However, only one of them may be provided depending on the type of the communication network.

The communication protocol abstraction section 9 uses one or both of the conversion table 12 and the conversion rule 13 to convert the data that the main equipment 200 transmits and receives into a data format that is compliant with the communication protocol of a communication network to be connected. Also, when needed, the communication protocol abstraction section 9 controls the data input to or output from the protocol stack 11 by creating a data frame.

The protocol stack 11 is a program module for performing network communications and is provided with three types of stacks, a protocol stackA11-1, a protocol stack B11-2, and a protocol stack C11-3, for each of the communication protocols. For example, the protocol stacksA11-1, B11-2, and C11-3 can be set as those for PROFINET, modbus-TCP, and EtherNet/IP, respectively. Hereinafter, the protocol stackA11-1, the protocol stack B11-2, and the protocol stack C11-3 may be generally referred to as a protocol stack 11.

The Ethernet driver 14 controls the communication control circuit 5 for the Ethernet. A communication protocol stack storage section, a conversion table storage section, and a conversion rule storage section according to the present invention are realized by the memory 3 in this Embodiment 1.

The main equipment 200 is provided with functional software 15 that provides data transmission and reception by connecting with a communication network.

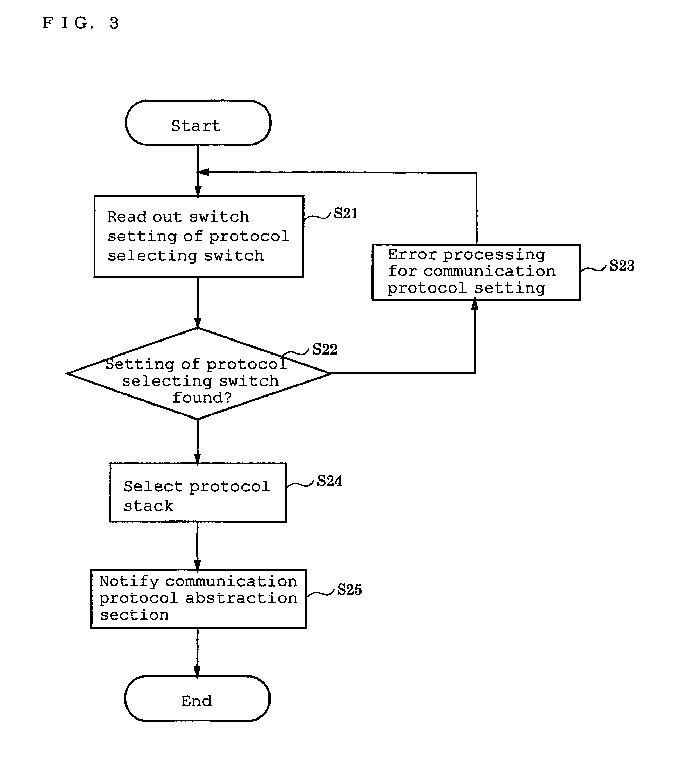

Operation of the protocol selecting section 10 is described below. Fig. 3 is a flowchart illustrating the protocol stack selecting operation performed by the protocol selecting section 10.

The protocol selecting section 10 reads the switch setting of the protocol selecting switch 4 on the basis of a signal inputted to the microcomputer 2 from the protocol, selecting switch 4 (S21). Then, the protocol selecting section 10 determines whether any setting of the protocol selecting switch 4 is found or not (S22), and performs error processing if no switch setting is found (S23). As for error processing, users may be notified of the occurrence of an error by, for example, causing a LED (not illustrated) provided in the communication adapter apparatus 100 to blink. Alternatively, the occurrence of an error may be notified to the main equipment 200, whereby an error message may be displayed on a display unit (not illustrated) connected to or provided in the main equipment 200.

If any switch setting is found in the protocol selecting switch 4, any one of the protocol stackA11-1, the protocol stack B11-2, and the protocol stack C11-3 is selected on the basis of such switch setting (S24). For example, the protocol stackA11-1 is selected for the bit setting of "00" in the protocol selecting switch 4, the protocol stack B11-2 is selected for "01", and the protocol stack C11-3 is selected for "10". By doing so, a protocol stack can be selected on the basis of the switch setting of the protocol selecting switch 4.

Then, the protocol selecting section 10 notifies the communication protocol abstraction section 9 of the protocol stack thus selected (S25). The communication protocol abstraction section 9 performs data conversion or the like for the data that the main equipment 200 transmits and receives on the basis of the selected protocol stack 11.

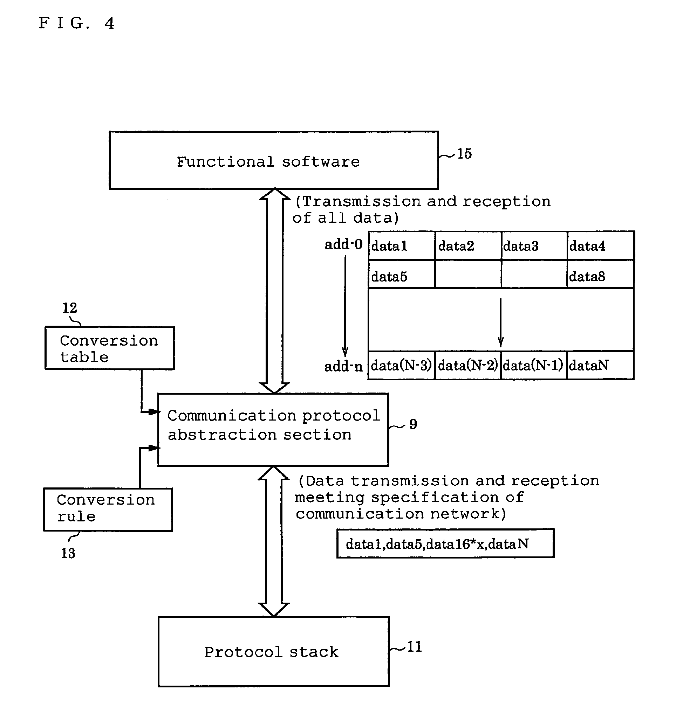

Operation of the communication protocol abstraction section 9 is exemplified below. Fig. 4 is a diagram illustrating the operation of the communication protocol abstraction section 9, in which only relevant components of those constituting the main equipment 200 and the communication adapter apparatus 100 are illustrated.

First, the case where data is transmitted from the main equipment 200 is described below. In Fig. 4, the functional software 15 of the main equipment 200 outputs all data such as control data, measurement data, and status data desired to be transmitted via a communication network. A manner in which data is outputted includes mutual access to a memory image using shared memory and data transmission and reception using a serial interface or the like. The functional software 15 can output all of the data desired to be transmitted, regardless of the communication protocol of a communication network to be connected.

When acquiring the data outputted from the functional software 15, the communication protocol abstraction section 9 converts such data into the data conforming to the selected protocol stack 11 in accordance with the conversion table 12 and the conversion rule 13. Specifically, the communication protocol abstraction section 9 performs selection of the data according to a communication protocol or data type conversion, and creates a data frame if needed. Then, the communication protocol abstraction section 9 outputs the data subjected to the data conversion to the protocol stack 11. By doing so, the data outputted from the functional software 15 can comply with the specification of the communication network to be connected and can be outputted to the protocol stack 11.

Data reception by the main equipment 200 is described below. When the protocol stack 11 receives data via a communication network, the communication protocol abstraction section 9 converts such data into the data receivable by the functional software 15 in accordance with the conversion table 12 and the conversion rule 13 and transmits all the data to the main equipment 200.

As described above, the communication adapter apparatus 100 according to Embodiment 1 is provided with the communication protocol abstraction section 9 for performing conversion of the data that the main equipment 200 transmits to and receives from a communication network in accordance with the protocol stack selected by the protocol selecting switch 4. This allows the main equipment 200 to perform data exchange with the communication adapter apparatus 100, regardless of the communication protocol of a communication network to be connected. Accordingly, this eliminates the necessity of developing the functional software 15 for each communication protocol, thereby reducing the development costs of the main equipment 200.

Also, the use of the protocol selecting switch 4 facilitates selection of a communication protocol to be used, allowing easy connection to various networks. In addition, the use of the protocol stack 11 allows connection with a plurality of communication networks, which eliminates the necessity of manufacturing a plurality of types of hardware for the communication adapter apparatus 100, thereby reducing the manufacturing cost. Furthermore, no necessity of manufacturing the communication adapter apparatus for each communication protocol results in avoidance of losses resulting from increasing product types in stock and a resultant increase in dead stock (unsold inventory).

Although an example of Embodiment 1 described above is configured with a 2-bit switch as the protocol selecting switch 4, it may also be configured with a 4-bit switch. In such a case, the inverted setting of the 2-bit settings made by users is set for the remaining 2 bits. This prevents false recognition of a communication network when users happen to forget making settings.

### Embodiment 2

In Embodiment 1 described above, all of the data of the functional software 15 in the main equipment 200 is shared by the main equipment 200 and the communication adapter apparatus 100. In Embodiment 2, an embodiment is described below in which the amount of data shared by the main equipment 200 and the communication adapter apparatus 100 can be reduced. The reference numerals and symbols in Embodiment 2 refer to the same components as those with the same reference numerals and symbols in Embodiment 1.

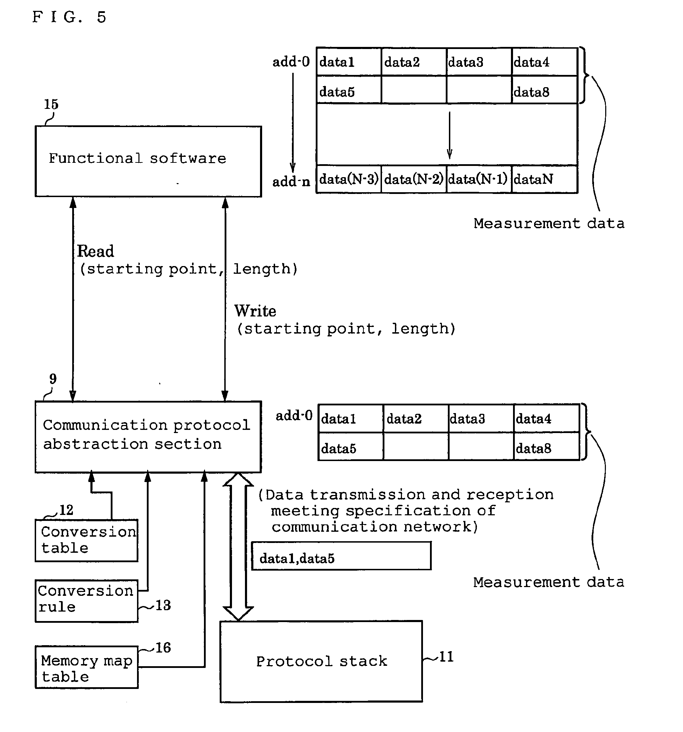

Fig. 5 is a view describing the operation of a communication protocol abstraction section 9 according to Embodiment 2, in which only relevant components of those constituting the main equipment 200 and the communication adapter apparatus 100 are illustrated.

In Fig. 5, the communication adapter apparatus 100 includes a memory map table 16 stored in the memory 3. The memory map table 16 is table information that stores the memory map configuration of a data memory (not illustrated) in the main equipment 200. The communication protocol abstraction section 9 can recognize the address of the data memory in the main equipment 200 and the content of data written into the address by referring to the memory map table 16. The memory map storage section according to the present invention is realized by the memory 3 in this Embodiment 2.

Operation of the communication protocol abstraction section 9 is exemplified below. The functional software 15 and the communication protocol abstraction section 9 perform data transmission and reception therebeween by specifying a range in which data read/write operation is performed. The case in which data is transmitted from the functional software 15 is described as an example.

If only measurement data of the data stored in the data memory is to be transmitted, the functional software 15 specifies a starting point address and data length and notifies them to the communication protocol abstraction section 9. The communication protocol abstraction section 9 acquires the measurement data in the functional software 15 on the basis of the specified starting point address and the data length. Then, the communication protocol abstraction section 9 converts the measurement data into the data conforming to the communication protocol in accordance with the conversion table 12 and the conversion rule 13 and outputs the data subjected to such conversion to the protocol stack 11. By doing so, the data outputted from the functional software 15 can comply with the specification of the communication network to be connected and can be outputted to the protocol stack 11.

As described above, the communication adapter apparatus 100 according to Embodiment 2 is provided with the memory map table 16 that shows the configuration of the data memory in the main equipment 200. This allows only the data transmitted and received to be acquired from the main equipment 200. Accordingly, this results in a reduction in memory resources that the communication adapter apparatus 100 should have for conversion of the data transmitted and received by the main equipment 200.

Data transmission and reception between the functional software 15 and the communication protocol abstraction section 9 can be efficiently performed by collectively arranging the similar data and the data to be simultaneously transmitted and received in the data memory (not illustrated) in the main equipment 200.

### Embodiment 3

In examples of Embodiments 1 and 2 described above, a communication adapter apparatus is described which allows the main equipment 200 to be connected to various communication networks that use a common physical interface. In Embodiment 3, a communication adapter apparatus is described below which can be applied to communication networks that have different physical interfaces.

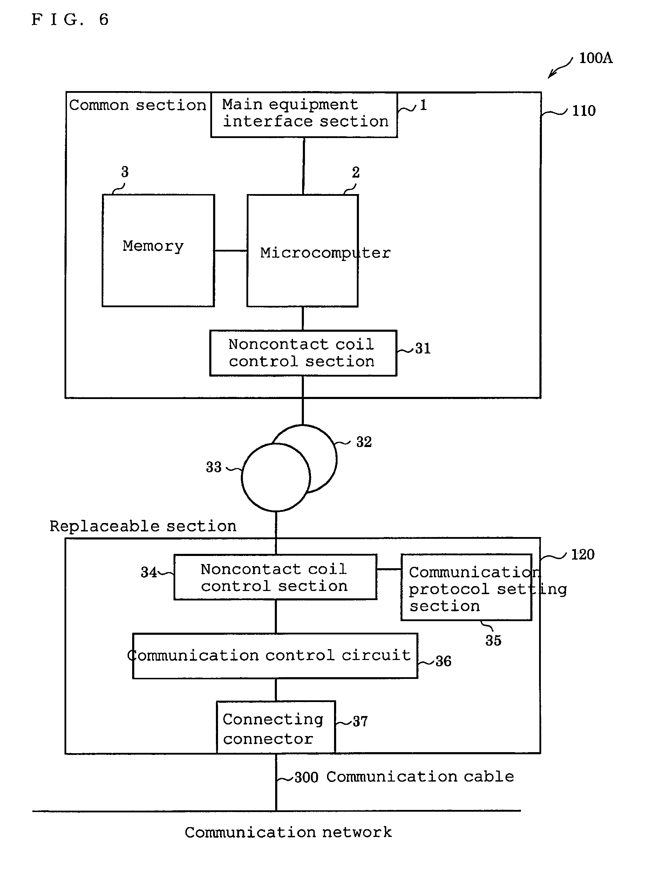

Fig. 6 is a hardware configuration diagram of a communication adapter apparatus 100A according to Embodiment 3. The communication adapter apparatus 100A is composed of a common section 110 and a replaceable section 120 which are separately provided. The reference numerals and symbols in Embodiment 3 refer to the same components as those with the same reference numerals and symbols in Embodiment 1.

The common section 110 includes a main equipment interface section 1, a microcomputer 2, a memory 3 that stores a conversion table 12 and a conversion rule 13, a noncontact coil control section 31, and a noncontact coil 32. Also, the replaceable section 120 includes a noncontact coil 33, a noncontact coil control section 34, a communication protocol setting section 35, a communication control circuit 36, and a connecting connector 37. The connecting connector 37 is a connector that supports the physical interface of a communication network to be connected. For Ethernet, the Ethernet connecting connector 6 as described in Embodiment 1 above corresponds to the connecting connector 37 of Embodiment 3. The communication control circuit 36 is a communication control circuit corresponding to the physical interface.

The noncontact coils 32, 33 are an antenna coil for performing noncontact communications. The noncontact coil control section 31 is a control circuit for controlling the noncontact coil 32, while the noncontact coil section 34 is a control circuit for controlling the noncontact coil 33. The common section 110 and the replaceable section 120 are physically detachable and can provide communications therebetween by a noncontact serial communication via the noncontact coil 32 and the noncontact coil 33.

The communication protocol setting section 35 is a circuit for setting a communication protocol supported by the replaceable section 120 for the common section 110 by the noncontact serial communication via the noncontact coils 32, 33.

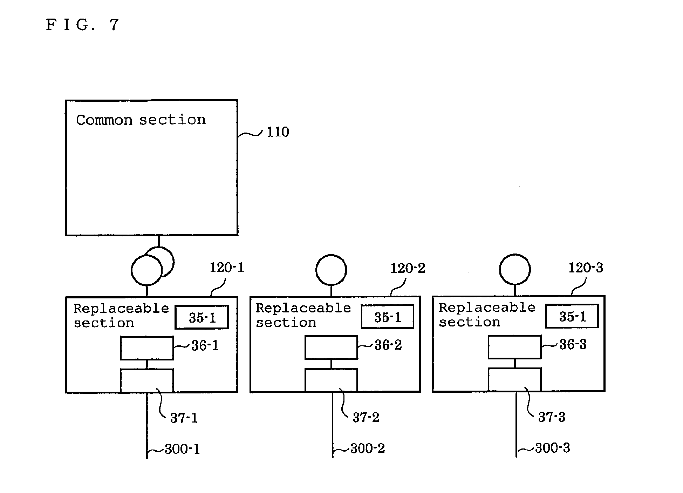

Fig. 7 is a diagram describing the operation of a communication adapter apparatus 100A having the configuration described above. As shown in Fig. 7, the plurality of replaceable sections 120A to 120C can be provided for each physical interface of a communication network to be connected. The replaceable sections 120A to 120c have the connecting connectors 37-1 to 37-3, respectively, which are different from one another and can be connected to communication cables 300-1 to 300-3, respectively. The communication protocol setting sections 35-1 to 35-3 in the replaceable sections 120A to 120C each set the supported communication protocol for the common section 110.

Users set any one selected from among the replaceable sections 120A to 120C in accordance with the physical interface of a communication network connecting to the main equipment 200. The communication protocol setting section 35 in such selected replaceable section 120 performs setting of the communication protocol for the common section 110 via a noncontact serial communication. The common section 110 selects the protocol stack 11 in accordance with the set communication protocol, as described in afore-mentioned Embodiments 1 and 2, and in accordance with the protocol stack 11 performs data conversion for the data to be transmitted and received between the main equipment 200 and the communication network.

As described above, in the communication adapter apparatus 100A according to Embodiment 3, a section which has a different physical interface to a communication network is provided as the replaceable section 120 that is detachable from the common section 110. This arrangement allows the main equipment 200 to be easily connected to a plurality of communication networks having different physical interfaces. Also, since a component independent on the difference in physical interface is provided as the common section 110, the common section 110 can be commonly used regardless of the difference of physical interfaces. Accordingly, the cost of manufacturing the communication adapter apparatus 100A can be reduced.

In addition, the replaceable section 120 incorporates only minimum components dependant on the physical interface of the communication network, resulting in a reduction in the cost of manufacturing the replaceable section 120.

Furthermore, the common section 110 and the replaceable section 120 provide noncontact serial communications using the noncontact coils 32, 33, thereby increasing flexibility in disposing the replaceable section 120. The connecting connector 37 in the replaceable section 120 varies in shape depending on a communication network, so the replaceable section 120 may vary in shape or size depending on the shape of the connecting connector 37. In this case also, the flexibility in disposing the replaceable section 120 allows the replaceable section 120 to be disposed in conformity with the installation environment. For example, when an attempt is made to externally attach the main equipment 200 to an external communication adapter apparatus 100A, the replaceable section 120 can be disposed in a proper location even if the space for installing the replaceable adapter apparatus 100A is limited.

### Embodiment 4

In Embodiment 3 above, communication protocol setting performed for the common section from the replaceable section is performed by the communication protocol setting section 35 through noncontact communications. In Embodiment 4, another example is described below in which a communication protocol is notified to the common section by the replaceable section. The reference numerals and symbols in Embodiment 4 refer to the same components as those with the same reference numerals and symbols in Embodiments 1 and 3.

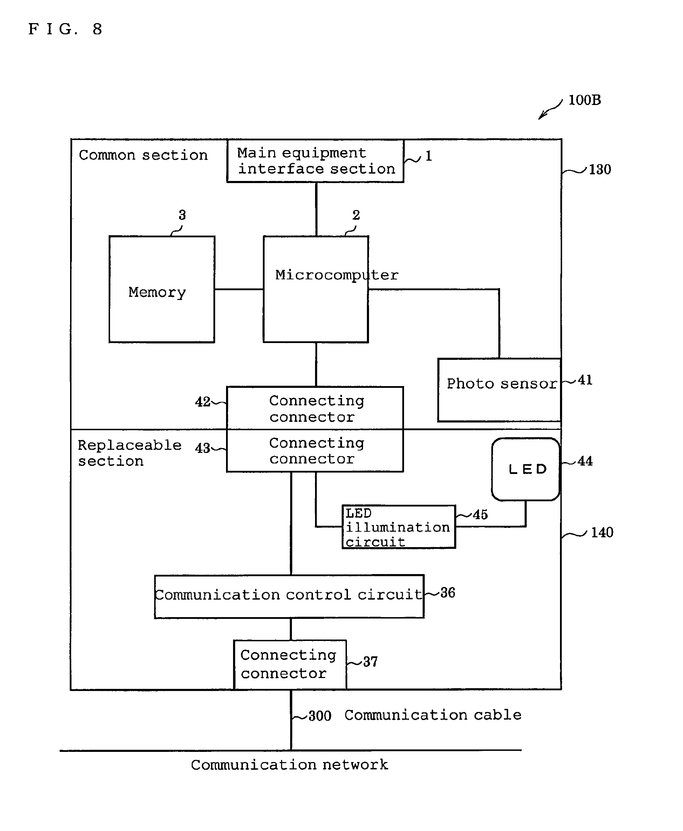

Fig. 8 is a hardware configuration diagram of a communication adapter apparatus 100B according to Embodiment 4. The communication adapter apparatus 100B is composed of a common section 130 and a replaceable section 140 which are separately provided. The common section 130 includes a main equipment interface section 1, a microcomputer 2, a memory 3 that stores a conversion table 12 and a conversion rule 13, a photo sensor 41, and a connecting connector 42. Also, the replaceable section 140 includes a connecting connector 43, an LED 44, an LED illumination circuit 45, a communication control circuit 36, and a connecting connector 37.

The connecting connectors 42, 43 are optional connecting connectors for connecting the common section 130 and the replaceable section 140.

The LED 44 corresponds to light emitting means of the present invention, and illuminates, under the control of the LED illumination circuit 45, in an illumination pattern or at an illumination frequency according to the communication protocol which the replaceable section 140 supports. Such an illumination pattern can be specified in terms of, for example, the number of blinks and an interval of blinking. An LED that is provided as a communication indicator for indicating the communication status of the communication adapter apparatus 100B can be used as the LED 44.

The photo sensor 41 is light receiving means that receives the light emitted by the LED 44 and outputs a signal corresponding to the received light to the microcomputer 2. The photo sensor 41 is installed in a location where the light emitted by the LED 44 can be received.

As is the case in Embodiment 3 described above, a plurality of replaceable sections 140 having the configuration described above can be provided for each physical interface of the communication network to be connected. Then, the replaceable section 140 selected according to the communication network connected to the main equipment 200 is connected to the common section 130.

When the replaceable section 140 is connected to the common section 130, the microcomputer 2 in the common section 130 sends a trigger signal to the replaceable section 140 via the connecting connectors 42, 43. Such a trigger signal causes the LED illumination circuit 45 to illuminate the LED 44 in an illumination pattern according to the communication protocol which the replaceable section 140 supports.

The photo sensor 41 receives the light emitted by the LED 44 and outputs a signal corresponding to the received light to the microcomputer 2. The protocol selecting section 10 of the microcomputer 2 which receives the signal outputted from the photo sensor 41 reads out the illumination pattern of the LED 44 and determines which communication protocol it is based on for selection of any one protocol stack 11. As is the case in Embodiments 1 and 2 described above, the common section performs data conversion for the data transmitted and received between the main equipment 200 and the communication network according to the protocol stack 11.

As described above, in the communication adapter apparatus 100B according to Embodiment 4, a section which has a different physical interface to a communication network is provided as the replaceable section 140 that is detachable from the common section 130. Accordingly, as is the case in Embodiment 3 described above, the cost of manufacturing the communication adapter apparatus 100B can be reduced.

Also, the replaceable section 140 determines the communication protocol on the basis of the light from the LED 44 that illuminates in a pattern corresponding to the communication protocol. This allows configuration of the communication adapter apparatus 100B at lower cost compared with a configuration in which the common section and the replaceable section provide communications therebetween by serial communication using noncontact coils, as described in Embodiment 3 above. Furthermore, if an LED provided as a communication indicator is used as the LED 44 of Embodiment 4, the manufacturing cost can be further reduced without any need of providing a separate LED.

### Industrial Applicability

The present invention can be applied to a system using various networks whose openness has been progressing, such as factory automation (FA) or building facilities. Reference Numerals

1 main equipment interface section, 2 microcomputer, 3 memory, 4 protocol selecting switch, 5 communication control circuit, 6 Ethernet connecting connector, 7 communication adapter interface section, 8 bus, 9 communication protocol abstraction section, 10 protocol selecting section, 11 protocol stack, 12 conversion table, 13 conversion rule, 14 Ethernet driver, 15 functional software, 16 memory map table, 31 noncontact coil control section, 32 noncontact coil, 33 noncontact coil, 34 noncontact coil control section, 35 communication protocol setting section, 36 communication control circuit, 37 connecting connector, 41 photo sensor, 42 connecting connector, 43 connecting connector, 44 LED, 45 LED illumination circuit, 100,100A,100B communication adapter apparatus, 110 common section, 120 replaceable section, 130 common section, 140 replaceable section, 200 main equipment, 300 communication cable

## Claims

1. A communication adapter apparatus (100) for connecting main equipment (200) to a communication network, comprising:
a main equipment interface section (1) connecting to said main equipment (200),
a communication protocol stack storage section (3) that stores a plurality of communication protocol stacks (11) corresponding to various communication networks,
a control section,
a communication connecting connector connecting to said communication network, and
a communication control section for controlling transmission and reception of communication data,
wherein said control section includes protocol selecting means (10) for selecting any one from among said plurality of communication protocol stacks (11) and protocol abstraction means (9) for performing data conversion for data that said main equipment (200) transmits to and receives from a communication network in accordance with a protocol stack selected by said protocol selecting means (10).

2. The communication adapter apparatus (100) of claim 1, further comprising either a conversion table storage section that stores a conversion table for performing said data conversion or a conversion rule storage section that stores conversion rule information for performing said data conversion, or both the conversion table storage section and the conversion rule storage section.

3. The communication adapter apparatus (100) of claim 1 or 2, comprising an operating switch that specifies a selected communication protocol stack to said protocol selecting means (10).

4. The communication adapter apparatus (100) of claim 3, wherein said operating switch outputs a signal with a decision bit for detecting an incorrect setting to said protocol selecting means (10).

5. The communication adapter apparatus (100) of any one of claims 1 to 4, further comprising:
a memory map storage section that stores a memory map configuration of said main equipment (200),
wherein said protocol abstraction means (9) reads out data for data conversion or writes data after data conversion by specifying a starting address and a range on the basis of said memory map configuration.

6. A communication adapter apparatus (100) for connecting main equipment (200) to a communication network, comprising:
a common section (110) including a main equipment interface section (1) connecting to said main equipment (200), a communication protocol stack storage section (3) that stores a plurality of communication protocol stacks (11) corresponding to various communication networks and a control section, and
a replaceable section (120,140) including a communication connecting connector connecting to said communication network and a communication control section controlling transmission and reception of communication data, wherein:
said control section includes protocol selecting means (10) for selecting any one from among said plurality of communication protocol stacks (11) and protocol abstraction means (9) for performing data conversion for data that said main equipment (200) transmits to and receives from the communication network in accordance with a communication protocol stack selected by the protocol selecting means (10); and
said common section (110) and said replaceable section (120, 140) are physically separable.

7. The communication adapter apparatus (100) of claim 6, said common section (110) comprising a common section noncontact coil performing noncontact communication with said replaceable section (120, 140), said replaceable section (120, 140) comprising a replaceable section noncontact coil performing noncontact communication with said common section (110) and a communication protocol setting section that sets a selected communication protocol stack to said protocol selecting means (10).

8. The communication adapter apparatus (100) of claim 6,
said replaceable section comprising light emitting means for emitting light corresponding to a type of a communication network,
said common section (110) comprising light receiving means for receiving the light emitted by said light emitting means and for outputting a signal corresponding to the light, wherein
said protocol selecting means (10) select any one from said plurality of communication protocol stacks (11) on the basis of the signal outputted from said light receiving means.
